# EUROPÄISCHE PATENTANMELDUNG

(11) **EP 2 503 848 A1**
(43) Veröffentlichungstag der Anmeldung: **26.09.2012**
(21) Anmeldenummer: 12157622.7
(22) Anmeldetag: 01.03.2012
(51) Int. Cl.: H05B 33/08

(54) **Beleuchtungsvorrichtung mit mindestens einer LED**

(30) Priorität: 23.03.2011 DE 102011005968
(71) Anmelder: OSRAM AG, 81543 München (DE)
(72) Erfinder: Schmacht, Thomas, 85253 Erdweg (DE)

(57) **Zusammenfassung**

Die vorliegende Erfindung betrifft eine Beleuchtungsvorrichtung (10) mit mindestens einer LED, insbesondere eine LED-Retrofit, bei der ein Überspannungsableiter (ÜSAG), dessen Durchbruchspannung über der maximalen Netzspannung und unter der Zündspannung der Leuchtstofflampe liegt, die durch eine erfindungsgemäße Beleuchtungsvorrichtung ersetzt werden soll. Auf diese Weise lässt sich eine erfindungsgemäße Beleuchtungsvorrichtung an dem ursprünglich für eine Leuchtstofflampe ausgelegten Vorschaltgerät betreiben, wobei überdies eine Gefährdung einer Bedienperson beim Einsetzen einer erfindungsgemäßen Beleuchtungsvorrichtung in eine Leuchte zuverlässig ausgeschlossen werden kann.

## Beschreibung

### Technisches Gebiet

Die vorliegende Erfindung betrifft eine Beleuchtungsvorrichtung mit mindestens einer LED umfassend einen ersten Anschluss, der einen ersten Anschlusspol und einen zweiten Anschlusspol umfasst, und einen zweiten Anschluss, der einen dritten Anschlusspol und einen vierten Anschlusspol umfasst.

### Stand der Technik

In jüngster Zeit sind verstärkt Bestrebungen im Gange, so genannte LED-Retrofits bereitzustellen, durch die sich Leuchtstofflampen ersetzen lassen. Ziel ist es dabei, die nötigen Umbaumaßnahmen minimal zu halten und dennoch eine ausreichende Sicherheit für eine Bedienperson beim Wechseln zu gewährleisten. Das Ersetzen von Leuchtstofflampen durch so genannte LED-Retrofits ist deshalb bevorzugt, weil LEDs einen höheren Wirkungsgrad sowie eine längere Lebensdauer aufweisen.

Problematisch bei den aus dem Stand der Technik bekannten Vorgehensweisen ist der Umstand, dass ein unmittelbares Ersetzen der Leuchtstofflampen durch LED-Retrofits nicht möglich ist, ohne dass irgendeine Veränderung an der Leuchte vorgenommen werden muss. Ohne entsprechende Veränderungen besteht bei den aus dem Stand der Technik bekannten LED-Retrofits die Gefahr, dass eine Bedienperson beim einseitigen Einsetzen der LED-Retrofit in eine Leuchte einen Stromschlag erhält, wenn sie die nicht eingesetzten Kontakte berührt.

Zur Verhinderung dieses unerwünschten Ereignisses ist es aus dem Stand der Technik bekannt, die Leuchte vollständig auf einen LED-Betrieb umzubauen, wobei in diesem Fall auch das die Leuchtstofflampe betreibende Vorschaltgerät ersetzt werden muss. Dies stellt einen großen Aufwand dar und ist deshalb unerwünscht. Bei einer anderen bekannten Vorgehensweise wird der Starter in der Leuchte durch eine Sicherung ersetzt. Derartige Eingriffe können gewöhnlich von einer Privatperson nicht vorgenommen werden, weshalb diese Vorgehensweise ebenfalls unbefriedigend ist.

### Darstellung der Erfindung

Die Aufgabe der vorliegenden Erfindung besteht deshalb darin, eine gattungsgemäße Beleuchtungsvorrichtung derart weiterzubilden, dass sie einerseits ein Ersetzen einer Leuchtstofflampe ohne Veränderungen an der Leuchte, in die die Leuchtstofflampe eingesetzt war, ermöglicht und andererseits eine Gefährdung einer Bedienperson, die eine derartige Beleuchtungsvorrichtung in die Leuchte einsetzt, zuverlässig ausgeschlossen ist.

Diese Aufgaben werden gelöst durch eine Beleuchtungsvorrichtung mit den Merkmalen von Patentanspruch 1.

Die vorliegende Erfindung basiert auf der Erkenntnis, dass in einer LED-Retrofit mithilfe eines Überspannungsableiters, dessen Ansprechspannung höher ist als die Netzspannung, aber niedriger als die Zündspannung der ursprünglich eingesetzten Leuchtstofflampe, zum einen ein Berührschutz erreicht wird und zum anderen die erfindungsgemäße Beleuchtungsvorrichtung über den, bei Anlegen der Zündspannung durch das für den Betrieb einer Leuchtstofflampe ausgelegte Vorschaltgerät, durchschlagenden Überspannungsableiter eingeschaltet und betrieben werden kann.

Erfindungsgemäß ist deshalb bei einer gattungsgemäßen Beleuchtungsvorrichtung vorgesehen, dass der erste Anschlusspol mit dem zweiten Anschlusspol unter Ausbildung eines ersten Kopplungspunkts miteinander gekoppelt ist, wobei der dritte Anschlusspol mit dem vierten Anschlusspol unter Ausbildung eines zweiten Kopplungspunkts miteinander gekoppelt ist. Erfindungsgemäß umfasst die Beleuchtungsvorrichtung weiterhin eine Durchbruchvorrichtung mit einer vorgebbaren Durchbruchspannung, einen elektronischen Schalter, der der Durchbruchvorrichtung parallel geschaltet ist, eine Treibervorrichtung für die mindestens eine LED mit einem Eingang, der einen ersten und einen zweiten Eingangsanschluss umfasst, und einem Ausgang zum Koppeln mit der mindestens einen LED, eine Ansteuerschaltung für den elektronischen Schalter, wobei die Ansteuerschaltung eine Strommessvorrichtung umfasst, wobei die Ansteuerschaltung ausgelegt ist, bei Feststellen eines Stroms über einem vorgebbaren Schwellwert den elektronischen Schalter leitend zu schalten, wobei der erste und der zweite Eingangsanschluss der Treibervorrichtung, die Parallelschaltung aus Durchbruchvorrichtung und elektronischem Schalter sowie die Strommessvorrichtung seriell zwischen den ersten und den zweiten Kopplungspunkt gekoppelt sind.

Eine erfindungsgemäße Beleuchtungsvorrichtung kann daher eine Leuchtstofflampe ohne die Notwendigkeit von Veränderungen an der Leuchte ersetzen, wobei für eine Bedienperson die Gefahr eines Stromschlags zuverlässig ausgeschlossen werden kann.

Bevorzugt ist die Durchbruchvorrichtung als elektrische Durchbruchvorrichtung, insbesondere als Überspannungsableiter, ausgebildet. Durch die Verwendung insbesondere eines Überspannungsableiters ist eine mechanische Trennung der beiden Anschlussseiten der Durchbruchvorrichtung gegeben, so dass eine kapazitive Übertragung von Energie auf die noch nicht in die Leuchte eingesetzte Seite der Beleuchtungsvorrichtung zuverlässig ausgeschlossen wird. Bei einem Triac wäre dies beispielsweise nicht gegeben.

Der elektronische Schalter ist bevorzugst als mechanischer Schalter, insbesondere als Relais, ausgebildet. Auch hier ist eine mechanische Trennung zwischen der in die Leuchte eingesetzten Seite einer Beleuchtungsvorrichtung und der noch nicht eingesetzten Seite erforderlich. Durch ein Relais kann eine Spannungsfestigkeit bis 4 kV ermöglicht werden, wobei zu bedenken ist, dass die zulässige Berührspannung bei 35 V liegt. Eine Transistorschaltung wäre nicht geeignet die vom weiterhin genutzten Vorschaltgerät, das ursprünglich zum Betrieb einer Leuchtstofflampe ausgelegt ist, bereitgestellten hohen Zündspannungen auf einen Wert unterhalb der zulässigen Berührspannung zu reduzieren.

Bei einer weiterhin bevorzugten Ausführungsform ist zwischen den ersten Anschlusspol und den ersten Kopplungspunkt ein erster ohmscher Widerstand und/oder zwischen den zweiten Anschlusspol und den ersten Kopplungspunkt ein zweiter ohmscher Widerstand und/oder zwischen den dritten Anschlusspol und den zweiten Kopplungspunkt ein dritter ohmscher Widerstand und/oder zwischen den vierten Anschlusspol und den zweiten Kopplungspunkt ein vierter ohmscher Widerstand gekoppelt. Auf diese Weise lässt sich der Wendelwiderstand der ursprünglich eingesetzten Leuchtstofflampe simulieren, wodurch ein Betrieb der LED-Retrofit auch an Vorschaltgeräten mit Wendelwiderstandserkennung ermöglicht wird. Um die Verluste, die in diesen Widerständen umgesetzt werden, zu minimieren, werden pro Anschluss bevorzugt zwei ohmsche Widerstände verwendet. Besonders bevorzugt ist der erste und der zweite ohmsche Widerstand und/oder der dritte und der vierte ohmsche Widerstand gleich groß. Dies trägt dem Umstand Rechnung, dass nicht vorhersehbar ist, welcher der Anschlusspole nach dem Einsetzen einer erfindungsgemäßen Beleuchtungsvorrichtung in eine Leuchte Strom führend sein wird. Auf diese Weise ist jedenfalls sichergestellt, dass der Wendelwiderstand der ursprünglichen Leuchtstofflampe einerseits nachgebildet wird und andererseits die Verluste im Betriebsmittel infolge dieser ohmschen Widerstände minimal sind. Wie bereits erwähnt, entspricht die Summe aus erstem und zweiten ohmschen Widerstand sowie die Summe aus drittem und viertem ohmschen Widerstand besonders bevorzugt einem vorgebbaren Wendelwiderstand einer Leuchtstofflampe, insbesondere der ursprünglich in die Leuchte eingesetzten Leuchtstofflampe.

Um ein problemloses Einsetzen zu ermöglichen, ist bevorzugt vorgesehen, dass die Beleuchtungsvorrichtung weiterhin ein Gehäuse umfasst, wobei das Gehäuse hinsichtlich seiner Abmessungen dem Gehäuse einer Leuchtstofflampe, insbesondere dem der ursprünglich in die Leuchte eingesetzten Leuchtstofflampe, entspricht.

Die Strommessvorrichtung kann bevorzugt einen Transformator, insbesondere einen Stromwandler, mit einer Primärinduktivität und einer Sekundärinduktivität umfassen, wobei die Primärinduktivität Teil der genannten Serienschaltung ist. Bei Auslegung des elektronischen Schalters als Relais, siehe oben, sind bevorzugt das Relais und der Transformator derart ausgelegt, dass im Betrieb der Beleuchtungsvorrichtung der Betriebsstrom durch die Primärinduktivität des Transformators auf der Sekundärseite des Transformators eine Spannung erzeugt, die das Relais eingeschaltet hält. Durch das eingeschaltete Relais ist demnach der durch das Relais realisierte elektronische Schalter geschlossen, wobei über diesen geschlossenen elektronischen Schalter der Betriebsstrom zum Betreiben der mindestens einen LED aufrechterhalten wird.

Besonders bevorzugt liegt die Durchbruchspannung der Durchbruchvorrichtung zwischen einer an den ersten oder zweiten Anschluss koppelbaren maximalen Netzwechselspannung und einer für eine Leuchtstofflampe, insbesondere eine Leuchtstofflampe, deren Gehäuse dieselben Abmessungen hat wie das Gehäuse der erfindungsgemäßen Beleuchtungsvorrichtung, vorgegebenen Zündspannung. Auf diese Weise wird sichergestellt, dass beim Einsetzen einer erfindungsgemäßen Beleuchtungsvorrichtung, bei der einer der Anschlusspole mit der Netzspannung in Kontakt kommt, diese nicht an die noch nicht eingesetzte Seite der Beleuchtungsvorrichtung übertragen wird. Erst die vom Vorschaltgerät an eine erfindungsgemäße Beleuchtungsvorrichtung angelegte Zündspannung führt zum Durchbruch der Durchbruchvorrichtung und ermöglicht im Anschluss daran den Betrieb der mindestens einen LED. Durch diese Vorgehensweise werden in optimaler Weise die Merkmale eines Vorschaltgeräts, das ursprünglich zum Betrieb einer Leuchtstofflampe ausgelegt war, nunmehr zum Betrieb der mindestens einen LED in derselben Leuchte genutzt, wobei zu keinem Zeitpunkt eine Gefährdung für eine eine erfindungsgemäße Beleuchtungsvorrichtung in eine Leuchte einsetzende Bedienperson besteht.

Weitere vorteilhafte Ausführungsformen ergeben sich aus den Unteransprüchen.

### Kurze Beschreibung der Zeichnung(en)

Im Nachfolgenden wird nunmehr ein Ausführungsbeispiel einer erfindungsgemäßen Beleuchtungsvorrichtung unter Bezugnahme auf die beigefügte Zeichnung näher beschrieben, die in schematischer Darstellung ein Ausführungsbeispiel einer erfindungsgemäßen Beleuchtungsvorrichtung zeigt.

### Bevorzugte Ausführung der Erfindung

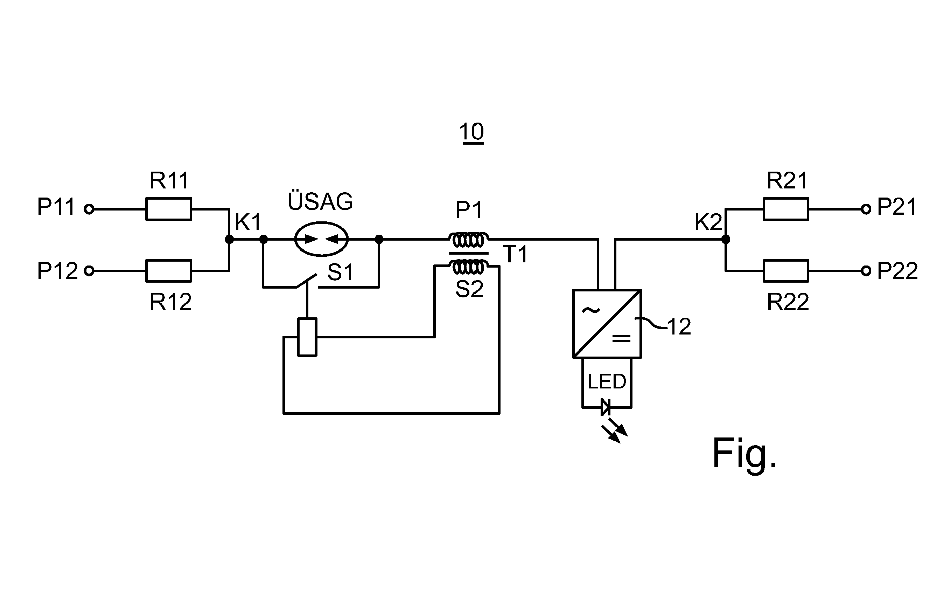

Fig. 1 zeigt in schematischer Darstellung ein Ausführungsbeispiel einer erfindungsgemäßen Beleuchtungsvorrichtung 10, die insbesondere in einem nicht dargestellten Gehäuse angeordnet ist, das von seinen Abmessungen her gleich ist mit dem Gehäuse der Leuchtstofflampe, die die erfindungsgemäße Beleuchtungsvorrichtung als sogenannte LED-Retrofit ersetzen soll.

Entsprechend einer Leuchtstofflampe ist ein erster Anschluss mit einem ersten Anschlusspol P11 und einem zweiten Anschlusspol P12 vorgesehen sowie ein zweiter Anschluss mit einem dritten Anschlusspol P21 und einem vierten Anschlusspol P22. Der erste Anschlusspol P11 ist über einen ersten ohmschen Widerstand R11 mit einem ersten Kopplungspunkt K1 gekoppelt, mit dem andererseits der zweite Anschlusspol P12 über einen ohmschen Widerstand R12 gekoppelt ist. Entsprechenderweise ist der dritte Anschlusspol P21 über einen ohmschen Widerstand R21 mit einem zweiten Kopplungspunkt K2 gekoppelt, mit dem ebenfalls der vierte Anschlusspol P22 über einen ohmschen Widerstand R22 gekoppelt ist. Die Summe der ohmschen Widerstände R11 und R12 sowie R21 und R22 dienen dazu, den Wendelwiderstand Rwendel der ursprünglich in die Leuchte eingesetzten Leuchtstofflampe zu simulieren, das heißt R11 + R12 = Rwendel und R21 + R22 = Rwendel. Damit lässt sich eine erfindungsgemäße Beleuchtungsvorrichtung auch in elektronischen Vorschaltgeräten mit Erkennung des Wendelwiderstands einsetzen und betreiben. Derartige elektronische Vorschaltgeräte stellen bestimmte Betriebsparameter in Abhängigkeit des erkannten Wendelwiderstands ein.

Die erfindungsgemäße Beleuchtungsvorrichtung 10 umfasst weiterhin einen Überspannungsableiter ÜSAG mit einer vorgebbaren Durchbruchspannung. Ein elektronischer Schalter S1 ist dem Überspannungsableiter ÜSAG parallel geschaltet. Weiterhin ist eine Treibervorrichtung 12 für die mindestens eine LED vorgesehen, wobei der Eingang der Treibervorrichtung 12 einen ersten und einen zweiten Eingangsanschluss umfasst sowie einen Ausgang zum Koppeln mit der mindestens einen LED. Ein Transformator T1, der als Stromwandler dient, weist eine Primärinduktivität P1 sowie eine Sekundärinduktivität S2 auf. Der elektronische Schalter S1 ist als Relais ausgeführt und ist mit der Sekundärinduktivität S2 gekoppelt. Die Primärinduktivität P1 ist seriell zur Parallelschaltung des Überspannungsableiters ÜSAG und des Schalters S1 sowie der Treibervorrichtung 12 zwischen die Kopplungspunkte K1 und K2 geschaltet. Die Durchbruchspannung des Überspannungsableiters ÜSAG ist so gewählt, dass sie höher ist als die Netzspannung, die beim Einsetzen der Beleuchtungsvorrichtung 10 in eine Leuchte an einen der Anschlusspole P11, P12, P21, P22 gekoppelt wird, damit der Überspannungsableiter ÜSAG nicht bereits dann anspricht, wenn die Beleuchtungsvorrichtung 10 nur einseitig eingesetzt wird. Andererseits ist die Durchbruchspannung des Überspannungsableiters ÜSAG kleiner gewählt als die Zündspannung der ursprünglich in die Leuchte eingesetzten Leuchtstofflampe, so dass infolge der an die Beleuchtungsvorrichtung 10 angelegten Zündspannung der Überspannungsableiter ÜSAG durchbricht. Dies ist allerdings erst dann der Fall, nachdem die Beleuchtungsvorrichtung 10 mit allen vier Anschlusspolen in die Leuchte eingesetzt wurde, so dass für eine Bedienperson zu diesem Zeitpunkt keine Gefährdung mehr besteht.

Wird eine Spannung zwischen den Anschlusspins P11 und P12 einerseits und P21 und P22 andererseits angelegt, so steht diese Spannung auch am Überspannungsableiter ÜSAG an, da im stromlosen Zustand keine Spannungen an den Widerständen R11 bis R22, der Treibervorrichtung 12 und dem Transformator T1 abfallen.

Erreicht die an den Anschlusspins P11 bis P22 angelegte Spannung die Durchbruchspannung des Überspannungsableiters ÜSAG, dann zündet dieser. Dadurch sinkt die über dem Überspannungsableiter ÜSAG abfallende Spannung ab, beispielsweise auf 24 V. Infolge dessen kommt es zu einem Stromfluss zwischen den Anschlusspins über die jeweiligen ohmschen Widerstände, die Treibervorrichtung 12 sowie den Transformator T1. Die Treibervorrichtung 12 erhält aufgrund der geringen Spannungsabfälle der übrigen Bauteile nahezu die gesamte, an den Anschlusspolen P11 bis P22 angelegte Spannung.

Durch den Stromfluss entsteht eine Spannung über der Primärinduktivität P1 und infolgedessen über der Sekundärinduktivität S2. Diese Spannung lässt das Relais S1 anziehen, wodurch der Überspannungsableiter ÜSAG kurzgeschlossen wird. Damit übernimmt das Relais S1 den Betriebsstrom. Infolge des nun fließenden Betriebsstroms bleibt das Relais weiterhin geschlossen. Es befindet sich nun in Selbsthaltung. In diesem Zustand wird die Treibervorrichtung 12 weiterhin mit Spannung versorgt.

Beim Ausschalten fällt das Relais S2 ab, sobald der Stromfluss so gering wird, dass die auf der Sekundärseite S2 des Transformators T1 erzeugte Spannung nicht mehr ausreicht, das Relais S1 zu halten.

## Patentansprüche

1. Beleuchtungsvorrichtung (10) mit mindestens einer LED umfassend:
- einen ersten Anschluss, der einen ersten Anschlusspol (P11) und einen zweiten Anschlusspol umfasst (P12); und
- einen zweiten Anschluss, der einen dritten Anschlusspol (P21) und einen vierten Anschlusspol umfasst (P22);
**dadurch gekennzeichnet,**
**dass** der erste Anschlusspol (P11) mit dem zweiten Anschlusspol (P12) unter Ausbildung eines ersten Kopplungspunkts (K1) miteinander gekoppelt sind, wobei der dritte Anschlusspol (P21) mit dem vierten Anschlusspol (P22) unter Ausbildung eines zweiten Kopplungspunkts (K2) miteinander gekoppelt sind;
wobei die Beleuchtungsvorrichtung (10) weiterhin umfasst:
- eine Durchbruchvorrichtung (ÜSAG) mit einer vorgebbaren Durchbruchspannung;
- einen elektronischen Schalter (S1), der der Durchbruchvorrichtung (ÜSAG) parallel geschaltet ist;
- eine Treibervorrichtung (12) für die mindestens eine LED mit einem Eingang, der einen ersten und einen zweiten Eingangsanschluss umfasst, und einem Ausgang zum Koppeln mit der mindestens einen LED;
- eine Ansteuerschaltung (T1) für den elektronischen Schalter, wobei die Ansteuerschaltung (T1) eine Strommessvorrichtung umfasst, wobei die Ansteuerschaltung (T1) ausgelegt ist, bei Feststellen eines Stroms über einem vorgebbaren Schwellwert den elektronischen Schalter (S1) leitend zu schalten;
- wobei der erste und der zweite Eingangsanschluss der Treibervorrichtung (12), die Parallelschaltung aus Durchbruchvorrichtung (ÜSAG) und elektronischem Schalter (S1) sowie die Strommessvorrichtung seriell zwischen den ersten (K1) und den zweiten Kopplungspunkt (K2) gekoppelt sind.

2. Beleuchtungsvorrichtung (10) nach Anspruch 1,
**dadurch gekennzeichnet,**
**dass** die Durchbruchvorrichtung (ÜSAG) als elektrische Durchbruchvorrichtung (ÜSAG), insbesondere als Überspannungsableiter (ÜSAG), ausgebildet ist.

3. Beleuchtungsvorrichtung (10) nach einem der Ansprüche 1 oder 2,
**dadurch gekennzeichnet,**
**dass** der elektronische Schalter (S1) als mechanischer Schalter (S1), insbesondere als Relais (S1), ausgebildet ist.

4. Beleuchtungsvorrichtung (10) nach einem der vorhergehenden Ansprüche,
**dadurch gekennzeichnet,**
**dass** zwischen den ersten Anschlusspol (P11) und den ersten Kopplungspunkt (K1) ein erster ohmscher Widerstand (R11) und/oder zwischen den zweiten Anschlusspol (P12) und den ersten Kopplungspunkt (K1) ein zweiter ohmscher Widerstand (R12) und/oder zwischen den dritten Anschlusspol (P21) und den zweiten Kopplungspunkt (K2) ein dritter ohmscher Widerstand (R21) und/oder zwischen den vierten Anschlusspol (P22) und den zweiten Kopplungspunkt (K2) ein vierter ohmscher Widerstand (R22) gekoppelt ist.

5. Beleuchtungsvorrichtung (10) nach Anspruch 4,
**dadurch gekennzeichnet,**
**dass** der erste (R11) und der zweite ohmsche Widerstand (R12) und/oder der dritte (R21) und der vierte ohmsche Widerstand (R22) gleich groß sind.

6. Beleuchtungsvorrichtung (10) nach einem der Ansprüche 4 oder 5,
**dadurch gekennzeichnet,**
**dass** die Summe aus ersten (R11) und zweitem ohmschen Widerstand (R12) sowie die Summe aus drittem (R21) und viertem ohmschen Widerstand (R22) einem vorgebbaren Wendelwiderstand einer Leuchtstofflampe entspricht.

7. Beleuchtungsvorrichtung (10) nach einem der vorhergehenden Ansprüche,
**dadurch gekennzeichnet,**
**dass** die Beleuchtungsvorrichtung (10) weiterhin ein Gehäuse umfasst, wobei das Gehäuse hinsichtlich seiner Abmessungen dem Gehäuse einer Leuchtstofflampe entspricht.

8. Beleuchtungsvorrichtung (10) nach einem der vorhergehenden Ansprüche,
**dadurch gekennzeichnet,**
**dass** die Strommessvorrichtung einen Transformator (T1), insbesondere einen Stromwandler, mit einer Primärinduktivität (P1) und einer Sekundärinduktivität (S2) umfasst, wobei die Primärinduktivität (P1) Teil der genannten Serienschaltung ist.

9. Beleuchtungsvorrichtung (10) nach Anspruch 8 in Rückbezug auf Anspruch 3,
**dadurch gekennzeichnet,**
**dass** das Relais (S1) und der Transformator (T1) derart ausgelegt sind, dass im Betrieb der Beleuchtungsvorrichtung (10) der Betriebsstrom durch die Primärinduktivität (P1) des Transformators (T1) auf der Sekundärseite des Transformators (T1) eine Spannung erzeugt, die das Relais (S1) eingeschaltet hält.

10. Beleuchtungsvorrichtung (10) nach einem der vorhergehenden Ansprüche,
**dadurch gekennzeichnet,**
**dass** die Durchbruchspannung der Durchbruchvorrichtung (ÜSAG) zwischen einer an den ersten oder zweiten Anschluss koppelbaren maximalen Netzwechselspannung und einer für eine Leuchtstofflampe, insbesondere eine Leuchtstofflampe, deren Gehäuse dieselben Abmessungen hat wie das Gehäuse der Beleuchtungsvorrichtung (10), vorgebbaren Zündspannung liegt.
